# EUROPEAN PATENT APPLICATION

(11) **EP 4 112 429 A1**
(43) Date of publication of application: **04.01.2023**
(21) Application number: 22182255.4
(22) Date of filing: 30.06.2022
(51) Int. Cl.: B62J 1/04, B62J 1/00, B62J 1/08, B62J 1/02

(54) **IMPROVED CONTROLLED BENDING SADDDLE FOR BICYCLES**

(30) Priority: 02.07.2021 IT 202100017480
(71) Applicant: SELLE ITALIA S.r.l., 31011 Asolo (TV) (IT)
(72) Inventor: BIGOLIN, Giuseppe, I-31011 Asolo, TREVISO (IT); BIGOLIN, Riccardo, I-31011 Asolo, TREVISO (IT); PORTA, Mirko, I-31011 Asolo, TREVISO (IT)
(74) Representative: Mitola, Marco

(57) **Abstract**

A saddle (4) for bicycles, comprising a frame (8) for connection to a support or upright of an associated bicycle, the frame (8) extending from a front end (12) to a rear end (16) with respect to a prevailing longitudinal extension direction (X-X), the frame (8) being a bent tubular element and in one piece, a shell (20), superposed on the frame (8), the shell (20) extending between a front side (24) and a rear side (28), and being mechanically connected to the frame (8), at said front end (12) and rear end (16), respectively, a padding (32) superposed on the shell (20) on the side opposite to the frame (8). The frame (8) comprises, at the rear end (16), a pair of connecting appendages (36) to the shell (20), said connecting appendages (36) being directed in a transverse direction (T-T), perpendicular to the prevailing longitudinal extension direction (X-X), said connecting appendages (36) being fixed to the rear side (28) of the shell (20) by means of hinged connections.

## Description

### FIELD OF APPLICATION

The present invention relates to an improved controlled bending saddle for bicycles.

### BACKGROUND ART

As known, saddles for bicycles consist of a frame, which conventionally is tubular, for connecting the saddle to a central upright of a bicycle, a shell, associated at the bottom with the frame, and associated padding for covering the shell which constitutes the interface wit h the user.

The known solutions of saddles for bicycles have limitations in terms of flexibility and ability to absorb impacts and vibrations resulting from using the bicycle.

Indeed, there is a need for the saddle to at least partially elastically yield and/or damp the impacts transmitted to the user in order to improve the comfort of the saddle, especially when irregular roads are travelled.

The known solutions have limitations in terms of comfort unless particularly thick padding is used which, however, ends up excessively increasing the weight of the saddle and compromising the appearance thereof.

Moreover, the saddles of the known solutions provide for the couplings between the rear portion of the frame of the saddle and the shell to be located at the ischium of the user during regular use. Thereby, the saddles of the prior art are not comfortable for the user unless the thickness of the padding is further increased: however, as shown, this solution results in further disadvantages in terms of appearance and overall weight of the saddle.

Moreover, the saddles of the known art have a relatively rigid shell, albeit less rigid than the underlying frame, which is not capable of transmitting adequate riding comfort to the user unless, as seen, action is taken on the thickness of the padding.

Moreover, overall dimensions being equal, the saddles of the known art have adjustment limitations with respect to the upright of the bicycle to which they are fixed: in other words, the adjustment stroke in longitudinal direction is rather limited, the overall dimensions being equal.

### PRESENTATION OF THE INVENTION

Therefore, the need is felt to solve the drawbacks and limitations stated above with reference to the prior art.

Such a need is met by a saddle for bicycles according to claim 1.

### DESCRIPTION OF THE DRAWINGS

Further features and advantages of the present invention will become more comprehensible from the following description of preferred embodiments thereof, given by way of non-limiting examples, in which:

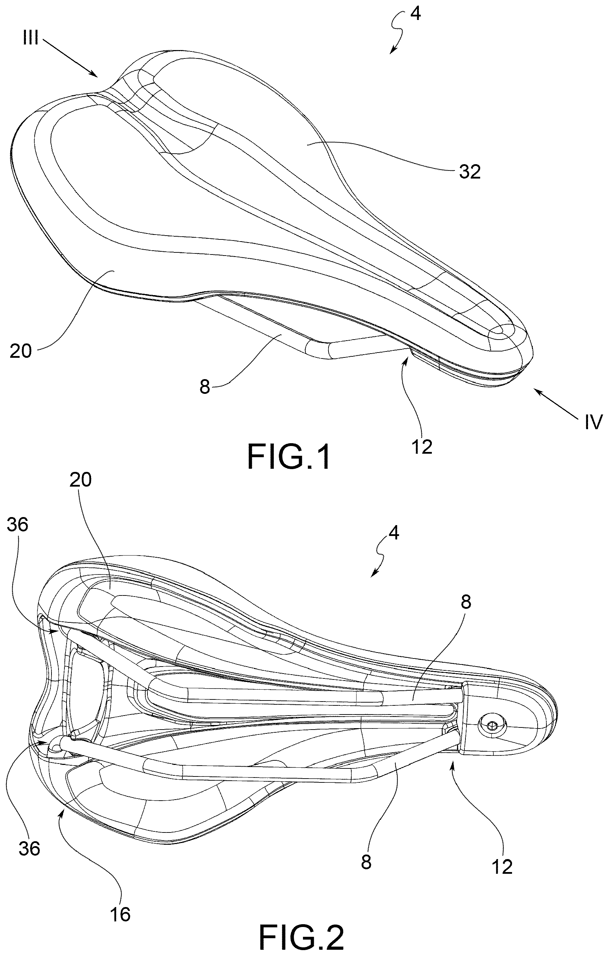

Figure 1 shows a top perspective view of a saddle according to a possible embodiment of the present invention;
Figure 2 shows a bottom perspective view of the saddle in Figure 1;

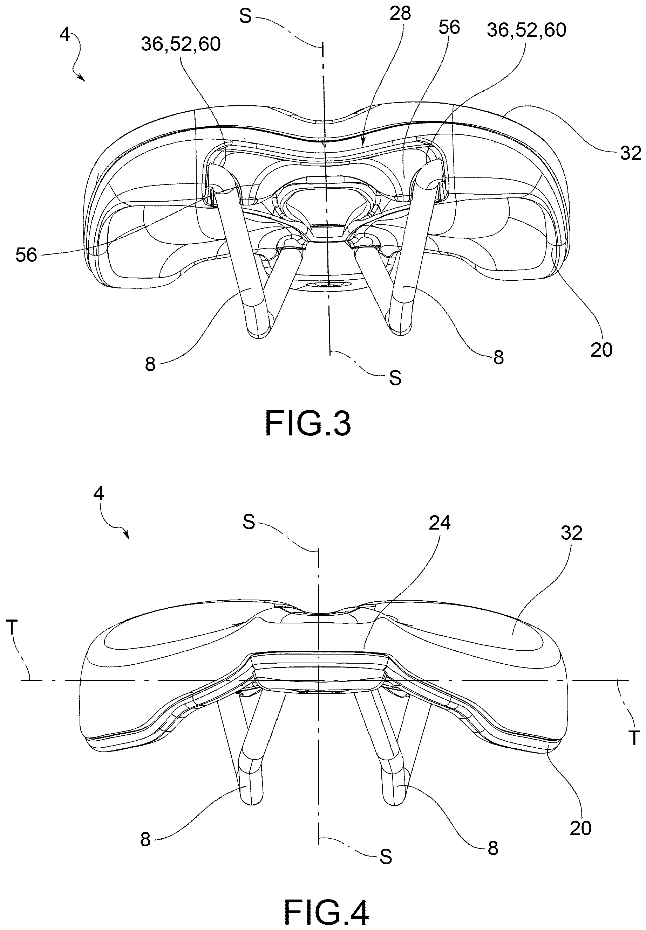

Figure 3 shows a side perspective view of the saddle in Figure 1, from the side of arrow III indicated in Figure 1;
Figure 4 shows a side perspective view of the saddle in Figure 1, from the side of arrow IV indicated in Figure 1;
Figure 5 shows a side view, in separate parts, of the saddle in Figure 1;
Figure 6 shows a comparative side view between a frame of the saddle according to the present invention and a frame of the known art;

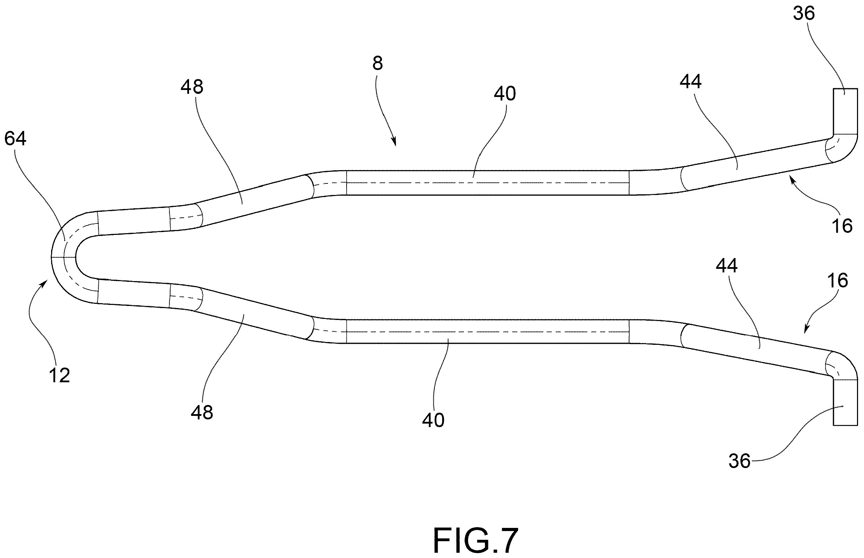

Figure 7 shows a plan view of a saddle frame according to an embodiment of the present invention;

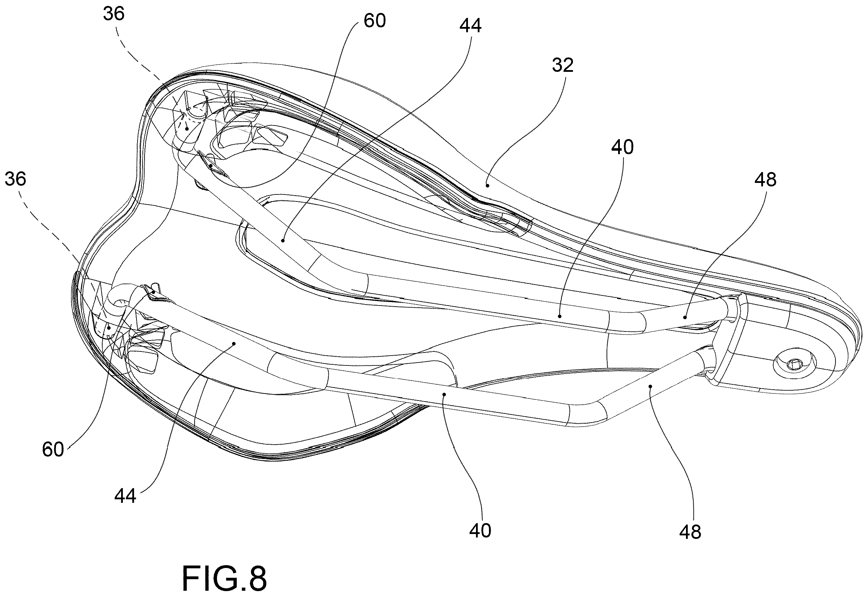

Figure 8 shows a partial transparency perspective view of a saddle according to a further embodiment of the present invention;
Figures 9a-9b show two simplified side views of a saddle according to a possible embodiment of the present invention.

The elements or parts of elements common to the embodiments described below will be indicated using the same reference numerals.

### DETAILED DESCRIPTION

With reference to the aforesaid drawings, a saddle for bicycles is globally indicated by numeral 4.

It should be noted that saddle 4 can be employed on any type of bicycle even if preferably it is particularly adapted to an off-road use.

Saddle 4 for bicycles comprises a frame 8 for connection to a support or upright (not shown) of an associable bicycle, in which frame 8 extends from a front end 12 to a rear end 16 with respect to a prevailing longitudinal extension direction X-X.

Preferably, frame 8 is a bent tubular element and in one piece.

Preferably, frame 8 is a bent tubular element with a circular cross-section; obviously, also further sections are possible.

The frame can be made of ferrous, non-ferrous and composite materials.

Saddle 4 further comprises a shell 20, superposed on frame 8; in particular, shell 20 extends between a front side 24 and a rear side 28, and is mechanically connected to frame 8 at said front 12 and rear 16 ends, respectively.

Shell 20 preferably is made of thermoplastic, composite material and/or with potential bi-injections.

Saddle 4 further comprises a padding 32 superposed on shell 20, on the opposite side to frame 8.

Preferably, padding 32, and a possible covering thereof, is made of polyurethane, EVA, neoprene, gel - microfiber covering, PU, leather, PVC.

Said padding 32 can be obtained by molding, injection and/or "vacuum" technology.

In particular, frame 8 comprises, at the rear end 16, a pair of connecting appendages 36 to shell 20; said connecting appendages 36 are directed in a transverse direction T-T, perpendicular to the prevailing longitudinal extension direction X-X.

Said connecting appendages 36 are fixed to the rear side 28 of shell 20 by means of hinged connections.

Said hinged connections can be obtained by means of interference connection, co-molding and/or threaded connecting means.

Frame 8, at the front end 12, can be both hinged and interlocked to the front side 24 of shell 20, as better described below.

Frame 8 is shaped to provide a horizontal central section 40, parallel to said prevailing longitudinal extension direction X-X, a rear ascending section 44 terminating with a connection to the rear side 28 of shell 20, and a front ascending section 48 terminating with a connection to the front side 24 of shell 20.

Preferably, but not exclusively, said horizontal central section 40 extends at least 30% of the overall length of frame 8 along the prevailing longitudinal extension direction X-X.

It should be noted that the horizontal central section 40 allows the fixing and also the axial adjustment, in prevailing longitudinal direction X-X, of frame 8, and therefore of saddle 4, with respect to the upright of the frame of the bicycle on which it is fixed.

The presence of a horizontal central section 40 having an extension of at least 30% of the overall length of frame 8 allows a greater adjustment section to be obtained with respect to the solutions of the prior art.

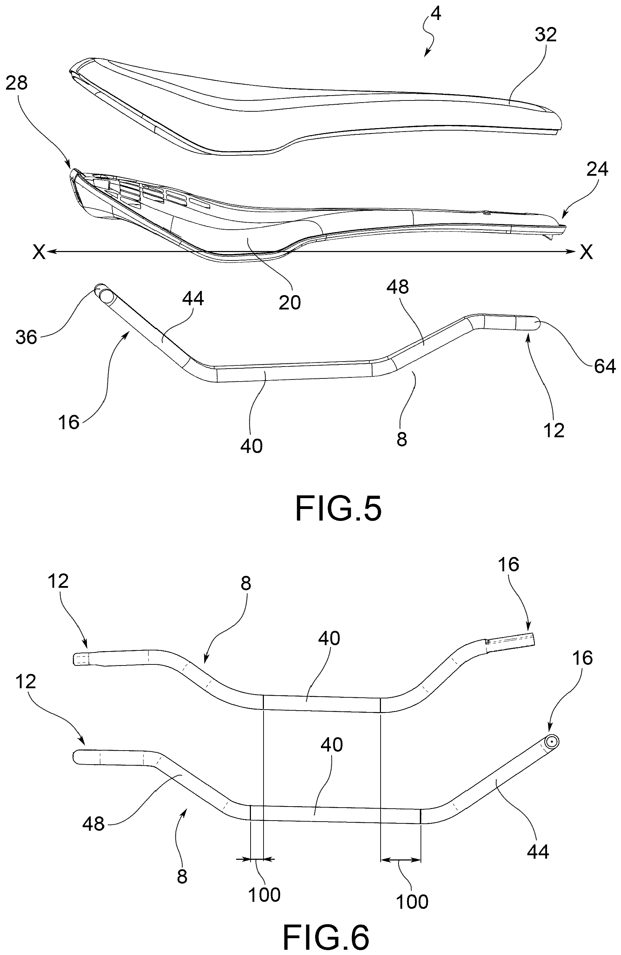

This technical effect/advantage is clearly illustrated in Figure 6 in which a frame of the known art (at the top) is placed side-by-side a frame (at the top) according to the present invention. It should be noted that overall longitudinal dimensions being equal, the horizontal central section 40 of the present invention is larger and therefore allows an increased adjustment stroke 100.

Preferably, frame 8 comprises a single bent tubular element having a plane of symmetry S-S parallel to the prevailing longitudinal extension direction X-X.

According to a possible embodiment, the bent tubular element is closed on the side of the front end 12 and is open on the side of the rear end 16 so that the connecting appendages 36 extend cantilevered from opposite sides with respect to said plane of symmetry S-S.

According to a further possible embodiment, said bent tubular element is closed both on the side of the front end 12 and the side of the rear end 16 so that the connecting appendages 36 extend cantilevered towards said plane of symmetry S-S and connect at the latter.

Advantageously, a perimeter of said frame 8 is entirely within a perimeter of shell 20, said perimeters being measured with respect to a projection on a horizontal longitudinal plane tangent to said padding 32.

The connection between frame 8 and shell 20 is an essential element for the purposes of the present invention.

According to a possible embodiment, the connecting appendages 36 have at least one protrusion 52 acting as an undercut, preventing the connecting appendages 36 from slipping out of shell, along said transverse direction T-T. Such non-slip protrusions 52 are optional and not required in case of interlocking insertion of frame 8.

According to a possible embodiment, shell 20, in the vicinity of each of the connecting appendages 36, comprises a stop 56, on the side opposite to an engagement portion of the appendages themselves to shell 20, so as to prevent said connecting appendages 36 from slipping out of the shell along said transverse direction T-T.

According to a possible embodiment, rotational damper elements 60 are interposed between the connecting appendages 36 and the shell along rotation axes parallel to said transverse direction T-T.

Preferably, said rotational damper elements 60, when provided, are interchangeable.

For example, said rotational damper elements 60 comprise bearings, solid lubricants, metal and/or rubber inserts.

For example, said rotational damper elements 60 comprise dampers which can be mechanically adjusted by means of a dowel or screw.

According to the hardness/softness and/or volume of the rotational damper elements 60 used, the bending of shell 20 can be controlled in a highly accurate manner without the need to change the technology of the materials employed.

Frame 8 comprises, at the front end 12, a bent portion 64 connected to the front side 24 of shell 20.

According to a possible embodiment, said bent portion 64 is interlocked to the front side 24 of shell 20: said interlocking is obtained, for example by means of interference connection, co-molding and/or threaded connecting means.

The interposition of a rotational damper element 60 can also be provided at the front end 12 of frame 8.

As can be appreciated from the above description, the saddle described above allows overcoming the drawbacks introduced in the known art.

The present invention allows providing a saddle capable of absorbing the rough ground, thus being particularly comfortable, without requiring the use of increased padding with respect to the solutions of the known art.

Contrarily, the saddle according to the present invention also allows using paddings that are thinner than the known solutions, given that it allows a shell with greater flexibility to be obtained.

Therefore, the shell is capable of bending more than the known solutions so as to increase the overall comfort level.

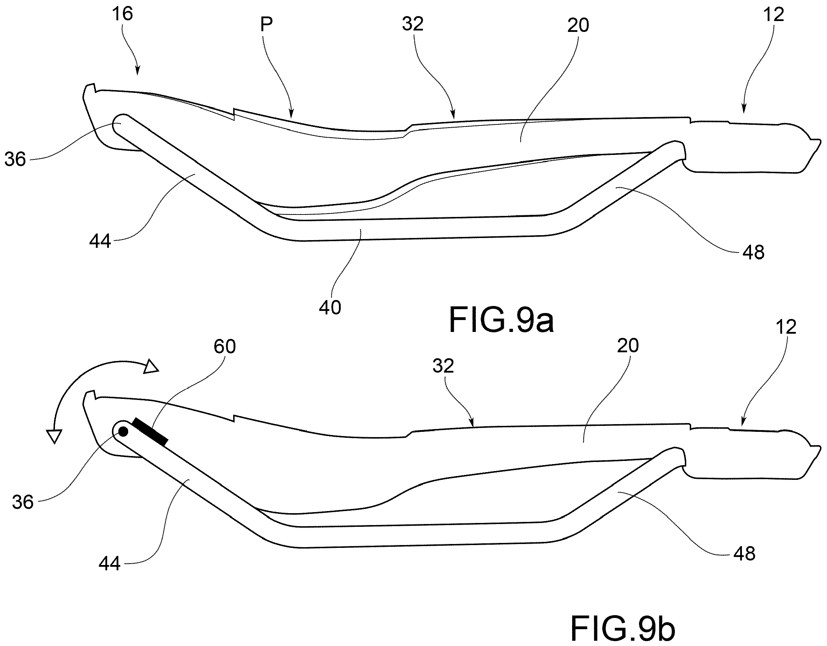

Indeed, there are hinged connections at the connecting appendages which allow an easy rotation of the shell with respect to the frame. As seen, such a rotation preferably is controlled by means of rotational dampers. Thereby, the riding comfort is increased on the one hand because the shell is capable of bending much more than the solutions of the known art under the action of an external load P transmitted by the user. On the other hand, such a bending movement is controlled by means of the rotation of the shell around the rear end of the frame. As seen, in order to increase such comfort, it is also possible to allow the rotation of the front end of the frame by means of similar hinge connections with the shell. Such a rotation of the shell at the rear end of the frame is apparent, for example, in Figure 9b.

Moreover, the solution of the present invention does not provide positioning joining points between the rear portion of the frame and the shell, at the ischium. In particular, such joining points are in a retracted position with respect to the ischium by virtue of the fact that the frame engages on the shell in transverse and not longitudinal direction.

Thereby, increasing the thickness of the padding close to of the user's ischium is not required.

Moreover, the solution of the present invention allows an increased longitudinal adjustment of the related position between the saddle and the fixing upright of the bicycle frame to be obtained, the overall saddle length being the same. Indeed, the horizontal frame portion parallel to said longitudinal direction is greater by virtue of the fact that the connection between the frame and the shell is transverse.

In order to meet contingent, specific needs, those skilled in the art can make several changes and variations to the solutions described above.

The scope of protection of the present invention is defined by the following claims.

## Claims

1. A saddle (4) for bicycles comprising:
- a frame (8) for connection to a support or upright of an associated bicycle, the frame (8) extending from a front end (12) to a rear end (16) with respect to a prevailing longitudinal extension direction (X-X),
- the frame (8) being a bent tubular element and in one piece,
- a shell (20), superposed on the frame (8), the shell (20) extending between a front side (24) and a rear side (28), and being mechanically connected to the frame (8) at said front end (12) and rear end (16), respectively,
- a padding (32) superposed on the shell (20), opposite to the frame (8),
- wherein the frame (8) comprises, at the rear end (16), a pair of connecting appendages (36) to the shell (20), said connecting appendages (36) being directed in a transverse direction (T-T), perpendicular to the prevailing longitudinal extension direction (X-X),
- said connecting appendages (36) being fixed to the rear side (28) of the shell (20) by means of hinged connections.

2. The saddle (4) for bicycles according to claim 1, wherein the frame (8), at the front end (12), is interlocked or hinged to the front side (24) of the shell (20) .

3. The saddle (4) for bicycles according to claim 1 or 2, wherein the frame (8) is shaped to provide a horizontal central section (40), parallel to said prevailing longitudinal extension direction (X-X), a rear ascending section (44) terminating with a connection to the rear side (28) of the shell (20), and a front ascending section (48) terminating with a connection to the front side (24) of the shell (20), wherein said horizontal central section (40) extends at least 30% of the overall length of the frame (8) along the prevailing longitudinal extension direction (X-X).

4. The saddle (4) for bicycles according to any one of claims 1 to 3, wherein the frame (8) comprises a single bent tubular element having a plane of symmetry (S-S) parallel to the prevailing longitudinal extension direction (X-X).

5. The saddle (4) for bicycles according to claim 4, wherein said bent tubular element is closed on the side of the front end (12) and is open on the side of the rear end (16) so that the connecting appendages (36) extend cantilevered from opposite sides with respect to said plane of symmetry (S-S).

6. The saddle (4) for bicycles according to claim 4, wherein said bent tubular element is closed both on the side of the front end (12) and the side of the rear end (16) so that the connecting appendages (36) extend cantilevered towards said plane of symmetry (S-S) and connect at the latter.

7. The saddle (4) for bicycles according to any one of claims 1 to 6, wherein a perimeter of said frame (8) lies entirely within a perimeter of said shell (20), said perimeters being measured with respect to a projection on a horizontal longitudinal plane tangent to said padding (32) .

8. The saddle (4) for bicycles according to any one of claims 1 to 7, wherein the connecting appendages (36) have at least one protrusion (52) that acts as an undercut, preventing the connecting appendages (36) from slipping out of the shell (20), along said transverse direction (T-T).

9. The saddle (4) for bicycles according to any one of claims 1 to 8, wherein the shell (20) comprises, in the vicinity of each of the connecting appendages (36), a stop (56), on the side opposite to an engagement portion of said appendages (36) to the shell (20), so as to prevent the connecting appendages (36) from slipping out of the shell (20) along said transverse direction (T-T).

10. The saddle (4) for bicycles according to any one of claims 1 to 9, wherein rotational damper elements (60) are interposed and interlocked between the connecting appendages (36) and the shell (20) along rotation axes parallel to said transverse direction (T-T).

11. The saddle (4) for bicycles according to claim 10, wherein said rotational damper elements (60) are interchangeable.

12. The saddle (4) for bicycles according to any one of claims 1 to 11, wherein the frame (8) comprises, at the front end (12), a bent portion (64) connected to the front side (24) of the shell (20).

13. The saddle (4) for bicycles according to claim 12, wherein said bent portion (64) is interlocked with the front side of the shell.

14. The saddle (4) for bicycles according to any one of claims 1 to 13, wherein the frame (8) is a tubular element with a circular cross-section.
